# FASCICULE DE BREVET EUROPEEN

(11) **EP 0 911 243 B1**
(45) Date de publication et mention de la délivrance du brevet: **10.09.2003**
(21) Numéro de dépôt: 98402597.3
(22) Date de dépôt: 19.10.1998
(51) Int. Cl.: B62D 1/04, B60R 21/20

(54) **Volant de direction de véhicule automobile**
Lenkrad eines Kraftfahrzeuges
Motor vehicle steering wheel

(30) Priorité: 21.10.1997 FR 9713184
(43) Date de publication de la demande: 28.04.1999
(73) Titulaire: DALPHI-METAL FRANCE SARL, 78000 Versailles (FR)
(72) Inventeur: Buzer, Alain, 25200 Montbeliard (FR)
(74) Mandataire: Habasque, Etienne Joel Jean-François

(56) Documents cités:
- US-A- 4 200 309
- US-A- 5 560 264
- US-A- 5 593 178
- "SERVICEABLE HORN SWITCH" RESEARCH DISCLOSURE, no. 371, 1 mars 1995, page 143 XP000512366

## Description

La présente invention concerne un volant de direction de véhicule automobile.

Plus particulièrement, l'invention se rapporte à un tel volant qui comporte une portion externe formant jante de volant raccordée à une portion interne formant coussin central de volant, adaptée pour permettre la fixation du volant sur un arbre de direction du véhicule.

En règle générale, un tel volant comporte une armature comprenant un certain nombre de pièces parmi lesquelles une jante annulaire raccordée par un ou plusieurs bras de liaison à des moyens formant moyeu de fixation de ce volant sur l'arbre de direction.

Ces moyens formant moyeu peuvent également comporter des moyens de réception d'un module à sac gonflable dans le coussin central du volant.

Une fois ces différentes pièces de l'armature assemblées les unes aux autres, celle-ci est introduite dans un moule permettant de former autour de la jante et de la face avant de ce volant, des moyens d'habillage en matière plastique.

Ensuite une coquille d'habillage est fixée sur cette armature sur le côté de celle-ci opposé à ces moyens d'habillage pour former la face arrière de ce volant.

On conçoit cependant qu'une telle structure présente un certain nombre d'inconvénients notamment au niveau de sa complexité, ce qui se traduit par un temps et un coût de fabrication relativement élevés.

Le but de l'invention est donc de résoudre ces problèmes.

A cet effet, l'invention a pour objet un volant de direction automobile selon la revendication 1.

L'invention sera mieux comprise à l'aide de la description qui va suivre donnée uniquement à titre d'exemple et faite en se référant aux dessins annexés sur lesquels :
- La Fig.1 représente une vue en perspective éclatée illustrant la structure générale d'un volant de direction selon l'invention ;
- la Fig.2 représente une vue en coupe d'un tel volant ; et
la Fig.3 représente une vue de détail illustrant un exemple de réalisation de moyens de raccordement d'une jante à une pièce d'ossature, entrant dans la constitution d'un volant selon l'invention.

On reconnaît en effet sur ces figures, un volant de direction de véhicule automobile désigné par la référence générale 1, qui comporte une portion externe formant jante de volant, désignée par la référence générale 2, et raccordée à une portion interne formant coussin central de volant, désignée par la référence générale 3, et adaptée pour permettre la fixation du volant sur un arbre de direction du véhicule, de façon classique.

Selon l'invention, le volant comporte une pièce d'ossature unique désignée par la référence générale 4, adaptée pour permettre le raccordement de la jante à l'arbre de direction et se présentant sous la forme générale d'une coupelle ou d'un bol dont la face arrière est destinée à constituer la face arrière du volant.

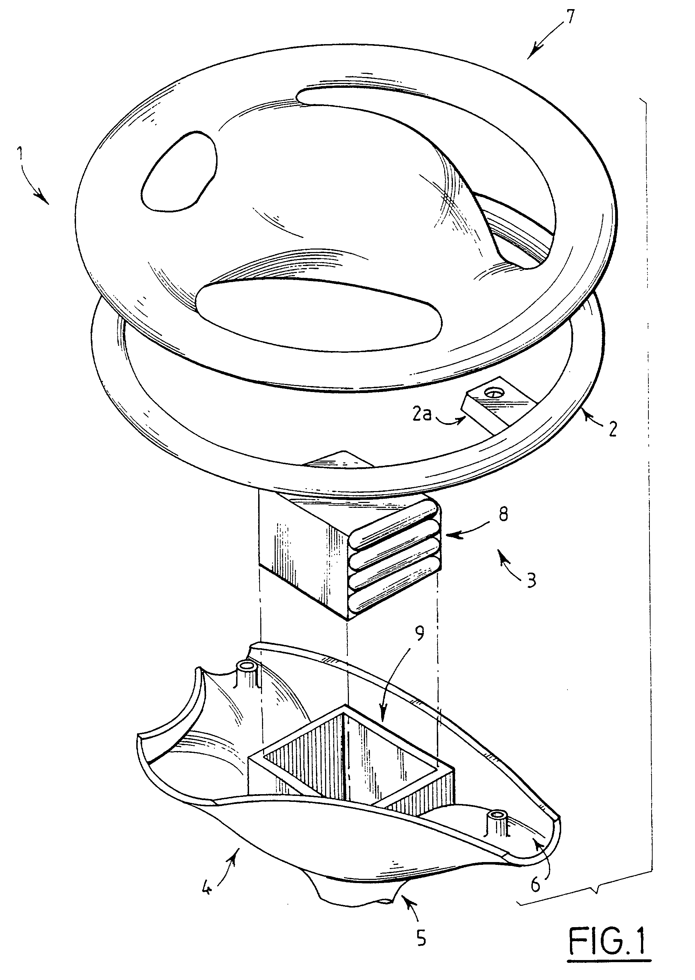

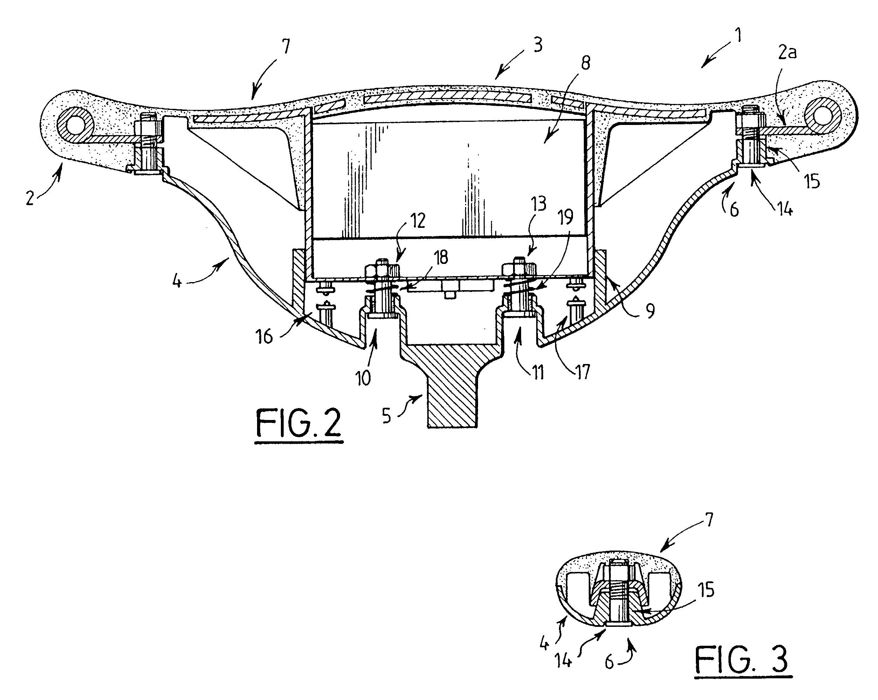

Comme cela est visible sur ces figures et en particulier sur les Figs.1 et 2, cette pièce d'ossature unique 4 se présentant sous la forme générale d'une coupelle, comporte dans la partie centrale de sa face arrière des moyens formant moyeu de fixation du volant sur l'arbre de direction, désignés par la référence générale 5 sur ces figures.

De plus, cette pièce d'ossature 4 comporte à sa partie périphérique des moyens de raccordement à la jante du volant, ces moyens de raccordement étant par exemple désignés par la référence générale 6 et dont un exemple de réalisation est représenté en détail sur la Fig.3.

Enfin, la face avant de cette pièce d'ossature est destinée à recevoir des moyens d'habillage du volant désignés par la référence générale 7 sur ces figures.

Dans l'exemple décrit sur ces figures, un module à sac gonflable désigné par la référence générale 8 est intégré dans le coussin central 3 du volant. Dans ce cas, la pièce d'ossature 4 comporte en regard des moyens 5 formant moyeu de fixation du volant sur l'arbre de direction, des moyens de réception de ce module à sac gonflable, ces moyens de réception étant désignés par la référence générale 9 sur ces Figs. 1 et 2.

Ces moyens peuvent se présenter par exemple sous la forme d'une empreinte de forme appropriée permettant la réception du module à sac gonflable.

En fait, la pièce d'ossature 4 comporte, comme on peut le voir plus particulièrement sur la Fig.2, autour des moyens formant moyeu de fixation du volant sur l'arbre de direction, désignés par la référence générale 5, au moins un évidement de passage de moyens de vissage de ce module à sac gonflable sur la pièce d'ossature.

Dans l'exemple décrit, deux évidements diamétralement opposés, désignés par les références 10 et 11, sont utilisés pour permettre le passage de deux vis respectivement 12 et 13 de fixation du module à sac gonflable 8 sur la pièce d'ossature 4.

Il va de soi bien entendu que d'autres modes de réalisation de ces moyens de fixation peuvent être envisagés.

De même, différents modes de réalisation des moyens 5 formant moyeu de fixation du volant sur l'arbre de direction peuvent être envisagés.

Ces moyens de fixation peuvent être par exemple des moyens de fixation à encliquetage ou autre, dont la structure est bien connue dans l'état de la technique.

Au niveau de sa partie périphérique, la pièce d'ossature 4 comporte des moyens de raccordement de la jante du volant sur cette pièce d'ossature, qui comportent également par exemple des moyens de vissage 14 de cette jante et plus particulièrement de portions de fixation 2a de celle-ci sur la pièce d'ossature.

Dans ce cas également, la pièce d'ossature 4 comporte des évidements correspondants par exemple 15, permettant le passage de ces moyens de vissage.

Il va de soi bien entendu que des bouchons d'obturation de ces différents évidements de la pièce d'ossature peuvent être envisagés.

On notera également que la face arrière de cette pièce d'ossature peut être adaptée pour recevoir un revêtement d'habillage tel que par exemple une peinture ou une peau d'aspect, si on ne souhaite pas laisser cette pièce à nu.

Il va de soi bien entendu que plusieurs matériaux différents peuvent être utilisés pour former une telle pièce d'ossature dont la fonction est alors double à savoir premièrement, transmettre le couple de rotation et les autres sollicitations mécaniques entre la jante et l'arbre de direction et deuxièmement, constituer la face arrière de ce volant de direction, ce qui permet de supprimer d'une part les bras de liaison de la jante et d'autre part les coquilles d'habillage correspondantes qui sont utilisées dans l'état de la technique, pour masquer la structure interne d'un tel volant.

Enfin, le volant de direction selon l'invention et plus particulièrement son coussin central peuvent également être munis de moyens d'activation d'un organe fonctionnel du véhicule automobile tel que par exemple l'avertisseur sonore de celui-ci, de façon classique.

Dans ce cas, ces moyens d'activation se présentent par exemple sous la forme d'un ou de plusieurs commutateurs électriques, par exemple régulièrement répartis entre le module à sac gonflable 8 et l'ossature 4, ce module à sac gonflable et la partie des moyens d'habillage de la face avant de la pièce d'ossature étant alors montés déplaçables axialement par rapport au reste de celle-ci par appui de l'utilisateur sur ceux-ci pour permettre la commande de ces moyens d'activation.

Sur la Fig.2, ces moyens d'activation sont au nombre de deux et sont désignés par les références générales 16 et 17 et comportent chacun une première portion reliée à la pièce d'ossature et une seconde portion reliée au fond du module à sac gonflable.

On conçoit alors que lorsque l'utilisateur appuie sur la portion des moyens de garnissage située au centre du volant, il provoque un déplacement axial de celle-ci et du module à sac gonflable, dans le coussin central du volant, ce qui permet de mettre en contact les parties correspondantes des moyens d'activation 16 et 17, afin par exemple de fermer un circuit électrique pour permettre l'activation de l'organe fonctionnel correspondant.

Dans l'exemple décrit et pour permettre ce déplacement axial du module à sac gonflable et de la portion correspondante des moyens d'habillage, les vis de fixation 12 et 13 de ce module à sac gonflable sur la pièce d'ossature, sont des vis étagées associées à des moyens élastiques respectivement 18 et 19, interposés entre la pièce d'ossature et le module à sac gonflable et sollicitant celui-ci en direction opposée de la pièce d'ossature.

Comme on l'a indiqué précédemment, différents matériaux peuvent être utilisés pour réaliser la pièce d'ossature en forme de coupelle.

C'est ainsi par exemple que celle-ci peut être réalisée en matériau métallique ou en matière plastique chargée, pour présenter les caractéristiques mécaniques requises pour ce type d'applications.

Différents procédés de fabrication peuvent également être envisagés comme par exemple par moulage, emboutissage, etc...

On conçoit alors qu'une telle structure présente un certain nombre d'avantages par rapport aux structures de l'état de la technique dans la mesure où cette pièce d'ossature permet de remplacer avantageusement différentes pièces utilisées dans l'état de la technique à savoir d'une part les bras de raccordement de la jante aux moyens formant moyeu du volant et d'autre part la coquille d'habillage de la face arrière de ce volant.

Ceci permet alors de simplifier la structure du volant et donc sa fabrication et de réduire ses coûts, tout en améliorant ses performances mécaniques globales notamment de rigidité, de fréquence propre, etc...

On notera enfin que des parties en saillie de la pièce d'ossature unique peuvent s'étendre en direction des moyens d'habillage du volant pour former dans ceux-ci des effets de style.

De même ces moyens d'habillage peuvent également comporter des logements de réception par exemple d'éléments de style ou de commande d'autres organes fonctionnels du véhicule de façon classique.

La pièce d'ossature unique peut également être ajourée et présenter des portions de style comme par exemple des parties en relief, etc., destinées à conférer par exemple à celle-ci un style particulier.

Enfin, il est possible d'utiliser la même pièce d'ossature unique pour former des volants différents en changeant simplement les moyens d'habillage de sa face avant et cette pièce peut également être associée à des moyens de connexion électrique d'organes de commande, etc... portés par le volant, au reste des circuits du véhicule.

## Revendications

1. Volant de direction de véhicule automobile comportant une jante annulaire (2), des moyens d'habillage (7) de ladite jante (2) qui forment la face avant du volant, et une pièce d'ossature (4) se présentant sous la forme générale d'une coupelle dont la face arrière forme la face arrière du volant, et qui comporte dans sa partie centrale des moyens (5) formant moyeu de fixation du volant sur un arbre de direction du véhicule, **caractérisé en ce que** la pièce d'ossature et la jante sont formées par deux pièces distinctes qui comportent des moyens de fixation (14) complémentaires, et ladite pièce d'ossature (4) constitue une pièce d'ossature unique de transmission du couple de rotation entre la jante (2) et l'arbre de direction.

2. Volant de direction suivant la revendication 1, **caractérisé en ce que** la pièce d'ossature unique (4) comporte en regard des moyens (5) formant moyeu de fixation du volant sur l'arbre de direction, des moyens (9) de réception d'un module à sac gonflable.

3. Volant de direction suivant la revendication 2, **caractérisé en ce que** la pièce d'ossature unique (4) comporte au moins un évidement (11) de passage de moyens (13) de vissage du module à sac gonflable (8) sur celle-ci.

4. Volant de direction suivant l'une quelconque des revendications 1 à 3, **caractérisé en ce que** la pièce d'ossature unique (4) comporte dans sa partie périphérique des moyens (6) de raccordement à la jante du volant, **en ce que** les moyens de fixation (14) comprennent des moyens de vissage, et **en ce qu'**il comporte au niveau desdits moyens de raccordement (6) au moins un évidement (15) de passage desdits moyens de vissage (14).

5. Volant de direction suivant l'une quelconque des revendications précédentes, **caractérisé en ce que** la portion des moyens d'habillage (7) de la face avant de la pièce d'ossature unique (4) et le module à sac gonflable (8) sont montés déplaçables axialement par rapport au reste de celle-ci, par appui de l'utilisateur sur ceux-ci, pour permettre la commande de moyens (16, 17) d'activation d'un organe fonctionnel du véhicule, interposés entre ceux-ci et cette pièce d'ossature.

6. Volant de direction suivant la revendication 5, **caractérisé en ce que** la fixation du module à sac gonflable (8) sur la pièce d'ossature (4) est assurée par l'intermédiaire de moyens de vissage (12, 13) étagés et associés à des moyens élastiques (18, 19) de sollicitation de ce module en direction opposée à la pièce d'ossature (4).

7. Volant de direction suivant l'une quelconque des revendications précédentes, **caractérisé en ce que** la face arrière de la pièce d'ossature unique (4) est adaptée pour recevoir un revêtement d'habillage.

8. Volant de direction suivant l'une quelconque des revendications précédentes, **caractérisé en ce que** la pièce d'ossature unique (4) est ajourée.

9. Volant de direction suivant l'une quelconque des revendications précédentes, **caractérisé en ce que** la pièce d'ossature (4) est associée à des moyens de connexion électrique d'organes portés par ce volant, au reste des circuits du véhicule.

## Patentansprüche

1. Kraftfahrzeuglenkrad mit einer ringförmigen Felge (2), einem Organ (7) zur Verkleidung der Felge (2), das die Vorderseite des Lenkrads bildet, und einem Tragelement (4), das die allgemeine Form einer Schale besitzt, deren Rückseite die Rückseite des Lenkrads bildet, und das in seinem mittleren Bereich eine Einrichtung (5) aufweist, die eine Nabe zur Befestigung des Lenkrads an einer Lenksäule des Fahrzeugs bildet, **dadurch gekennzeichnet, dass** das Tragelement und die Felge durch zwei getrennte Teile gebildet sind, die komplementäre Befestigungsmittel (14) aufweisen, und das Tragelement (4) das einzige Element zur Übertragung des Drehmoments zwischen der Felge (2) und der Lenksäule darstellt.

2. Lenkrad nach Anspruch 1, **dadurch gekennzeichnet, dass** das einzige Tragelement (4) im Bereich der Einrichtung (5), die als Nabe zur Befestigung des Lenkrads an der Lenksäule des Fahrzeugs dient, eine Einrichtung (9) zur Aufnahme eines Airbagmoduls aufweist.

3. Lenkrad nach Anspruch 2, **dadurch gekennzeichnet, dass** das einzige Tragelement (4) wenigstens eine Ausnehmung (11) aufweist, durch welche Mittel (13) zum Anschrauben des Airbagmoduls (8) am Tragelement treten können.

4. Lenkrad nach einem der vorhergehenden Ansprüche, **dadurch gekennzeichnet, dass** das einzige Tragelement (4) in seinem Umfangsbereich Mittel (6) zum Verbinden mit der Felge des Lenkrads aufweist, dass die Befestigungsmittel (14) Schraubmittel umfassen, und dass es im Bereich der Verbindungsmittel (6) wenigstens eine Ausnehmung (15) aufweist, durch die die Schraubmittel (14) treten können.

5. Lenkrad nach einem der vorhergehenden Ansprüche, **dadurch gekennzeichnet, dass** der Abschnitt des Organs (7) zur Verkleidung der Vorderseite des einzigen Tragelements (4) und das Airbagmodul (8) in der Weise montiert sind, dass sie durch Druck des Benutzers auf sie gegenüber dem Rest des Tragelements axial verschieblich sind, um die Steuerung einer Einrichtung (16, 17) zum Betätigen eines Funktionsorgans des Fahrzeugs zu ermöglichen, die zwischen ihnen und dem Tragelement angeordnet ist.

6. Lenkrad nach Anspruch 5, **dadurch gekennzeichnet, dass** die Befestigung des Airbagmoduls (8) am Tragelement (4) durch abgesetzte Schraubanordnungen (12, 13) sichergestellt ist, die elastischen Organen (18, 19) zum Vorspannen des Moduls in einer vom Tragelement (4) fortweisenden Richtung zugeordnet sind.

7. Lenkrad nach einem der vorhergehenden Ansprüche, **dadurch gekennzeichnet, dass** die Rückseite des einzigen Tragelements (4) ausgebildet ist, einen Verkleidungsbelag aufzunehmen.

8. Lenkrad nach einem der vorhergehenden Ansprüche, **dadurch gekennzeichnet, dass** das einzige Tragelement (4) durchbrochen ist.

9. Lenkrad nach einem der vorhergehenden Ansprüche, **dadurch gekennzeichnet, dass** das Tragelement (4) Einrichtungen zugeordnet ist, die zur elektrischen Verbindung von vom Lenkrad getragenen Organen mit den übrigen Stromkreisen des Fahrzeugs dienen.

## Claims

1. Motor vehicle steering wheel comprising an annular rim (2), means (7) of covering the said rim (2) which form the front face of the steering wheel, and a framework piece (4) in the overall shape of a cup, the rear face of which forms the rear face of the steering wheel, and which in its central part comprises means (5) forming a hub for fixing the steering wheel onto a steering shaft of the vehicle, **characterized in that** the framework piece and the rim are formed by two separate pieces which comprise complementary fixing means (14), and the said framework piece (4) constitutes a single framework piece transmitting the torque between the rim (2) and the steering shaft.

2. Steering wheel according to Claim 1, **characterized in that** the single framework piece (4) comprises, facing means (5) forming a hub for fixing the steering wheel onto the steering shaft, means (9) for accommodating an airbag module.

3. Steering wheel according to Claim 2, **characterized in that** the single framework piece (4) has at least one recess (11) for the passage of means (13) for screwing the airbag module (8) onto this piece.

4. Steering wheel according to any one of Claims 1 to 3, **characterized in that** the single framework piece (4) comprises, in its peripheral part, means (6) of connection to the rim of the steering wheel, **in that** the fixing means (14) comprise screwing means, and **in that** it comprises, at the said connecting means (6), at least one recess (15) for the passage of the said screwing means (14).

5. Steering wheel according to any one of the preceding claims, **characterized in that** the portion of the means (7) for covering the front face of the single framework piece (4) and the airbag module (8) are mounted so that they can move axially with respect to the remainder of this piece, when the user presses on them, so as to allow control of means (16, 17) of activation of a functional member of the vehicle which are inserted between them and this framework piece.

6. Steering wheel according to Claim 5, **characterized in that** the airbag module (8) is fixed to the framework piece (4) by screwing means (12, 13) which are stepped and associated with elastic means (18, 19) for urging this module away from the framework piece (4).

7. Steering wheel according to any one of the preceding claims, **characterized in that** the rear face of the single framework piece (4) is designed to take a covering.

8. Steering wheel according to any one of the preceding claims, **characterized in that** the single framework piece (4) is perforated.

9. Steering wheel according to any one of the preceding claims, **characterized in that** the framework piece (4) is associated with means for electrically connecting members borne by this steering wheel to the remainder of the vehicle circuits.
